(19) Europäisches Patentamt / European Patent Office / Office européen des brevets

(11) **EP 3 388 501 A1**

(12) **EUROPEAN PATENT APPLICATION**
published in accordance with Art. 153(4) EPC

(43) Date of publication:
**17.10.2018 Bulletin 2018/42**

(21) Application number: **16873138.8**

(22) Date of filing: **09.12.2016**

(51) Int Cl.:
*C10M 171/00* (2006.01)      *C10M 103/00* (2006.01)
*C10M 103/02* (2006.01)      *C10M 103/06* (2006.01)
*C10M 107/04* (2006.01)      *C10M 107/06* (2006.01)
*C10M 107/38* (2006.01)      *C10M 107/44* (2006.01)
*C10M 107/50* (2006.01)      *C10N 50/08* (2006.01)

(86) International application number:
**PCT/JP2016/086816**

(87) International publication number:
**WO 2017/099245 (15.06.2017 Gazette 2017/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **11.12.2015 JP 2015242309**

(71) Applicants:
• **Dow Corning Toray Co., Ltd.
Tokyo 100-0004 (JP)**

• **Ricoh Company, Ltd.
Tokyo 143-8555 (JP)**

(72) Inventors:
• **SASAKI Takahiko
Ashigarakami-gun
Kanagawa 258-0112 (JP)**
• **YAMAGUCHI Tetsuji
Ashigarakami-gun
Kanagawa 258-0112 (JP)**

(74) Representative: **Murgitroyd & Company
Scotland House
165-169 Scotland Street
Glasgow G5 8PL (GB)**

(54) **SLIDING MEMBER EXCLUDING THOSE USED FOR IMAGE FORMATION DEVICE, COMPONENT, AND METHOD FOR REDUCING NOISE IN MACHINE DEVICE**

(57)    A sliding member (excluding that used for an image forming apparatus), which can maintain a satisfactory friction coefficient and reduce generation of to generate a rubbing sound (noise) caused by a continuously sliding member, is provided. An objective is also to provide a component and a mechanical apparatus using the sliding member, and a method for reducing noise caused from a mechanical apparatus. Another objective of the present invention is to provide a coating agent composition for such as the sliding member. The sliding member (excluding that used for an image forming apparatus) has a lubricating film contacting with another member, wherein an arithmetic average roughness Ra based on JIS B0601 (2001) of a surface of the lubricating film is 0.01-1.0 $\mu$m, and the lubricating film at least comprises 100 parts by mass of a coat-formable resin binder (A) and 5 to 200 parts by mass of a solid lubricant (B). A driving component and the like (excluding those used for an image forming apparatus) are provided with the sliding member.

EP 3 388 501 A1

**Description**

TECHNICAL FIELD

The present invention relates to a sliding member for reducing noise (especially a rubbing sound) from a mechanical apparatus excluding an image forming apparatus. Further, the present invention relates to a component and a mechanical apparatus having the foregoing member, excluding those used for an image forming apparatus. Also, the present invention relates to a noise reducing method, using the sliding member, for a mechanical apparatus excluding an image forming apparatus. The present application claims priority to Japanese Patent Application No.2015-242309 filed in Japan on December 11, 2015, and the contents of the application excluding those applied to an image forming apparatus are incorporated by reference herein.

In the present invention, the term "excluding an image forming apparatus" or "excluding that/those used for an image forming apparatus" means that something used for an image forming apparatus is expressly and voluntarily excluded by the applicant from a subject of the present invention concerning to the sliding member, the component, the mechanical apparatus and the noise reducing method for the mechanical apparatus. Herein, the term "image forming apparatus" includes a printer, copy, facsimile, scanner and composite product combining one or more of these apparatuses and an accessory, and an expendable used by these products.

BACKGROUND ART

As a sound generated when members slide with each other, there is a creak sound by stick-slip and a rubbing sound caused from a surface roughness of each member. In the former, the stick-slip occurred when the sliding member starts to slide can be suppressed and the creak sound can be reduced by decreasing a difference between a static friction coefficient and a dynamic friction coefficient of a lubricating film. However, the latter sound is the rubbing sound generated during a dynamic friction state in which the members are continuously sliding with each other, and it was not capable of suppressing the rubbing sound even when decreasing the difference between the static friction coefficient and the dynamic friction coefficient of the lubricating film.

On the other hand, for example, in Patent Literature 1, it is disclosed that an applied film containing a lubricant such as a base resin, a resin bead and wax, etc. is formed in order to obtain a pre-coated metal plate suppressing a rubbing sound and arithmetic average roughness Ra on a surface of the applied film is 0.3 to 4.5 $\mu$m. However, the members described in the patent literature is not sliding members which generates rubbing sound during a dynamic friction state in which the members are continuously sliding with each other, and there is a negative suggestion such that a disk-scratch resistance is inferior when an arithmetic average roughness Ra of the surface is less than 1.0 $\mu$m, therefore the technical problem to suppress the rubbing sound of the sliding members cannot be solved.

CITATION LIST

PATENT LITERATURE

Patent Literature 1: Japanese Unexamined Patent Application Publication No. 2007-167836 (Japanese Patent No. 4104637)

SUMMARY OF THE INVENTION

PROBLEMS TO BE SOLVED BY THE INVENTION

The inventors of the present application aim to provide a sliding member capable of maintaining a satisfactory friction coefficient and reducing generation of rubbing sound (noise) caused from members continuously sliding with each other in such as an automobile. Further, the inventors aim to provide a component and a mechanical apparatus using the sliding member, and a method for reducing noise generated from a mechanical apparatus. Also, the present invention is aimed to provide a coating agent composition used for such a sliding member.

MEANS FOR SOLVING THE PROBLEMS

As a result of extensive research in order to solve the above-mentioned problems, the present inventors have found that the above-mentioned problems can be solved by a sliding member (excluding that used for an image forming apparatus) that has a lubricating film contacting with another member, wherein an arithmetic average roughness Ra based on JIS B0601 (2001) of a surface of the lubricating film is 0.01 to 1.0 $\mu$m, and the lubricating film at least comprises

100 parts by mass of a coat-formable resin binder (A); and 5 to 200 parts by mass of a solid lubricant (B), and we have reached to the present invention.

Especially, the present inventors have found that the above-mentioned problems can be suitably solved by the sliding member such that the above-mentioned arithmetic average roughness Ra thereof is 0.01 to 0.40 $\mu$m, and we have reached to the present invention. Also, from a point of view of reducing the rubbing sound, the present inventors have found that the above-mentioned problems can be more suitably solved in case that the other member is a paper, a metal plate or a resin plate and the sliding member has the above-mentioned arithmetic average roughness Ra of 0.01 to 0.30 $\mu$m, and we have reached to the present invention.

EFFECTS OF THE INVENTION

The sliding member provided by the present inventors is capable of maintaining the satisfactory friction coefficient and reducing generation of the rubbing sound (noise) caused from members continuously sliding with other in such as an automobile. Further, the component and the mechanical apparatus using the sliding member, and the method for reducing noise generated from a mechanical apparatus can be provided by the present invention.

Furthermore, a coating agent composition of the present invention is adjusted so that the arithmetic average roughness Ra based on JIS B0601 (2001) of the lubricating film alone after applying and curing is within a specified range and the coating agent composition capable of reducing the rubbing sound generated from the surface sliding with a counter member even when the coating agent composition is applied on the sliding member. Herein, an applied film formed after coating can make a surface of the sliding member smoothly, and then reduce the rubbing sound generated by sliding on another member, maintain low friction coefficient and satisfactory wear resistance, and provide satisfactory adhesiveness to plastic-based materials, elastomer-based materials or metals such as stainless steel, steel plates, aluminum, etc.

DESCRIPTION OF ENBODIMENTS

The first aspect of the present invention is a sliding member (excluding that used for an image forming apparatus) that has a lubricating film contacting with another member, wherein an arithmetic average roughness Ra based on JIS B0601 (2001) of a surface of the lubricating film is 0.01 to 1.0 $\mu$m, and the lubricating film at least comprises 100 parts by mass of a coat-formable resin binder (A) and 5 to 200 parts by mass of a solid lubricant (B). Hereinafter, technical features of this sliding member are described.

[Roughness of a surface of the lubricating film (Ra)]

In the sliding member of the present invention, a surface roughness (Ra) of the lubricating film is 0.01 to 1.0 $\mu$m. Herein, the surface roughness of the lubricating film is defined as the arithmetic average roughness Ra based on JIS B0601 (2001) of the surface of the lubricating film, and then the lower this is, the more a resistance and a vibration at sliding are reduced, also a friction coefficient when sliding is reduced, so that generation of fricative sound can be suppressed. Especially, from a point of view of reducing a rubbing sound caused by roughness of both of the members and realizing quietness, the arithmetic average roughness Ra is preferably in a range selected from 0.01 to 0.50 $\mu$m, 0.01 to 0.40 $\mu$m and 0.01 to 0.30 $\mu$m, more preferably 0.01 to 0.25 $\mu$m and 0.01 to 0.20 $\mu$m. Herein, the surface roughness of the lubricating film may be in the above-mentioned ranges immediately after forming the lubricating film by coating, or the lubricating film after processing in surface polishing or sliding on a counter member may be in the above-mentioned ranges (especially preferable ranges). Especially, the reduction of rubbing sound and the achievement of quietness may be determined dependently on the surface roughness of the lubricating film, and the same technical effect is also achieved by changing a surface state after forming the lubricating film.

The sliding member having the above-mentioned lubricating film reduces the rubbing sound when the sliding member slides on another member. Specifically, if A decibel (dB) is defined as a sound pressure of a rubbing sound when a member without a lubricating film overlaps on another member and slides at 100 mm/sec and B decibel (dB) is defined as a sound pressure of a rubbing sound when the sliding member having the lubricating film with the above-mentioned surface roughness overlaps on another member and slides at 100 mm/sec, a reduction rate of the rubbing sound is denoted by (A-B)/A$\times$100 (%), so that the reduction rate of the rubbing sound can be realized more than 5%, preferably more than 10% or further preferably more than 15% by the foregoing sliding member having the above-mentioned lubricating film. Note that, since the sound pressure (decibel) of the rubbing sound is a logarithmic value, noise reduction of 5 to 30% in decibel means that an exponential reduction of noise is realized compared to an uncoated sliding member.

[(A) Coat-formable Resin Binder]

The above-mentioned lubricating film contains a coat-formable resin binder (A) for which a solvent-based resin or an aqueous resin may be used with no specific restriction, and a resin of an aqueous emulsion type may be preferably used. The coat-formable resin binder (A) is a component to be a main ingredient for forming a coating agent composition for the sliding member which forms the lubricating film of the present invention, forms a coating film by curing, and functions as a binder resin for solid particles and the like. The coating agent composition may be a composition of a solvent-based type or an aqueous type, preferably a coating agent composition of aqueous emulsion type from a point of view of quietness of the lubricating film, and is useful in that the lubricating film having the surface roughness (Ra) in the above-mentioned range can be easily designed.

The coat-formable resin binder (A) of the present invention, which is not limited to specific one, includes, for example, one or more coat-formable resin binders selected from a polyamide-imide resin, an epoxy resin, a silicone resin, a phenolic resin, a polyacrylic resin, a polyurethane resin and a polyolefin resin, or a modified product thereof. Especially, the component (A) is preferably a coat-formable resin binder of aqueous emulsion type, and includes, for example, a coat-formable resin binder which is synthesized by emulsion polymerization, soap-free emulsion polymerization, etc. and obtained by dispersing a curable resin component in water in a continuous phase.

Typically, the curable resin in the form of an aqueous emulsion can be obtained by emulsifying or dispersing a polymerizable curable resin monomer or a prepolymer in water under the presence or absence of a surfactant and then carrying out emulsion polymerization of the monomer or prepolymer by heating, etc. Through emulsion via the action of the surfactant or self-emulsification via the introduction of a hydrophilic group into a curable resin, the curable resin obtained by the emulsion polymerization takes a form in which fine particles of the minute curable resin are emulsified and dispersed in water, and generally exhibits an appearance suspended or clouded.

Since such resin particles in an emulsion and dispersion state take the form of an aqueous emulsion, there is an advantage that the resin particles are generally easily handled and environmental load is reduced because a film can be formed simply by removing water by drying, etc. compared with a type of using an organic solvent. In contrast, resin particles obtained by emulsion polymerization have high reactivity derived from unreacted monomers or residual reactive functional groups and tend to easily impair a uniform emulsion state by mixing of other components, in particular, other surfactants or mixing of hydrophilic/hydrophobic solid particles. Specifically, this refers to a thickening or gelation of a resin emulsion caused from non-uniformity by generation of bulky particles with time and/or proceeding of the polymerization reaction between resin particles.

The curable resin in the form of the aqueous emulsion can be synthesized by conventionally-known methods and is preferably a curable resin, in the form of an aqueous emulsion, obtained by emulsion polymerization in water using a surfactant, in particular, an ionic surfactant. Moreover, while the particle diameter of the curable resin particles in an emulsion is particularly unlimited, the particle diameter (median diameter) obtained by the laser diffraction scattering method is preferably approximately 0.1 to 10 $\mu$m, and the appearance thereof may be in the form of a cloudy liquid or suspension.

The polyacrylic resin in the form of an aqueous emulsion is the form of an aqueous emulsion or a suspension polymerization liquid and may be a homopolymer or a copolymer as long as it can be obtained by polymerizing one or more acryl-based monomers. Moreover, the structure and kind thereof are particularly unlimited. Examples of the above-mentioned acryl-based monomer may include one or more alkyl(meth)acrylates (having an alkyl group with a carbon number of preferably 1 to 8, more preferably 1 to 6, particularly preferably 1 to 4) such as methyl(meth)acrylate, ethyl(meth)acrylate, isopropyl(meth)acrylate, n-butyl(meth)acrylate, 2-ethylhexyl(meth)acrylate and octyl(meth)acrylate; lower alkoxy lower alkyl(meth)acrylates such as methoxymethyl(meth)acrylate, methoxyethyl(meth)acrylate, ethoxymethyl(meth)acrylate, ethoxyethyl(meth)acrylate and methoxybutyl(meth)acrylate; hydroxy lower alkyl(meth)acrylates such as 2-hydroxy ethyl(meth)acrylate and 3-hydroxy propyl(meth)acrylate; acrylamide, methacrylamide; (meth)acrylamides having an N-unsubstituted or substituted (in particular, lower alkoxy substituted) methylol group such as N-methylolacrylamide, N-methylolmethacrylamide, N-butoxymethylacrylamide and N-butoxymethylmethacrylamide; phosphonyloxy lower alkyl(meth)acrylates such as phosphonyloxymethyl(meth)acrylate, phosphonyloxyethyl(meth)acrylate and phosphonyloxypropyl(meth)acrylate; acrylonitrile; acrylic acid; methacrylic acid, etc. Note that the above-mentioned lower alkoxy and the above-mentioned lower alkyl generally mean alkoxy and alkyl each having a carbon number of 1 to 5, preferably a carbon number of 1 to 4, more preferably 1 to 3.

Herein, the polyacrylic resin may include a (meth)acrylic acid compound having a (meth) acrylic equivalent of 100 or smaller, preferably 95 or smaller, more preferably 90 or smaller as a component configuring the hard segment of the cured product, and a (meth)acrylic acid compound having a (meth)acrylic equivalent of 120 to 300, preferably 130 to 270, more preferably 150 to 250 as a component configuring the soft segment of the cured product, along with other curable resins (for example, a polyurethane resin, etc.), in order to further improve adhesion to various members. The present applicants propose the use of such a polyacrylic resin or a mixture with other curable resins as in International Patent Application PCT/JP14/061806.

The kind of the polyurethane resin is particularly unlimited, with the polyurethane resin obtained by reacting at least one polyol and at least one isocyanate being preferable. Note that a polyurethane resin in the form of an aqueous emulsion may be self-emulsifiable by the introduction of a hydrophilic group and may be a form emulsified and dispersed in water via an ionic surfactant, in particular, an anionic surfactant such as carboxylic acid triethyl amine salt.

As long as it has two or more hydroxyl groups in one molecule, the polyol is not particularly limited, with conventionally known polyols capable of being used. Examples thereof may include polyester polyols, polycarbonate polyols, polyether polyols, polycaprolactone polyols, polyalkylene polyols, etc. The polyols may be used alone, or two or more thereof may be used in combination.

Examples of polyester polyols may include polyester polyols obtained by condensation polymerization of polycarboxylic acid and polyol. Examples of polycarboxylic acids may include dicarboxylic acids such as succinic acid, terephthalic acid, isophthalic acid, dodecanedioic acid, 1,5-naphthalic acid, 2,6-naphthalic acid, succinic acid, glutaric acid, adipic acid, pimelic acid, suberic acid, azelaic acid, sebacic acid, dodecamethylene dicarboxylic acid, etc. As the polycarboxylic acid, linear dicarboxylic acid is preferable. The carbon number of the linear dicarboxylic acid is preferably 4 or more, more preferably 4 to 12. Moreover, the carbon number of linear dicarboxylic acid is particularly preferably an even number. Specific examples of such linear dicarboxylic acids may include succinic acid, adipic acid, suberic acid, sebacic acid, dodecanedioic acid, etc. Moreover, examples of polyols may include propylene glycol, 1,3-propanediol, 1,4-butanediol, neopentyl glycol, 1,5-pentanediol, 1,6-hexanediol, ethylene glycol, diethylene glycol, cyclohexanediol, etc. The polycarboxylic acid and polyol may each be used alone, or two or more thereof may be used in combination. The hydroxyl value of polyester polyol is preferably 2 to 160 mgKOH/g.

Polycarbonate polyol is a compound having a repeating unit represented by the formula: RO(C=O)O (wherein R represents a bivalent aliphatic or cycloaliphatic hydrocarbon group having a carbon number of 2 to 5), along with two or more hydroxyl groups, and examples thereof potentially includes polyhexamethylene carbonate polyol, polycyclohexanedimethylene carbonate polyol, etc.

Polycarbonate diol is a compound having the above-mentioned repeating unit and two hydroxyl groups in a molecule. Polycarbonate diol can be synthesized from aliphatic and/or cycloaliphatic diol via various methods described in Polymer Review Vol. 9, pages 9 to 20 (in 1964), written by Schell. Examples of preferable diols may include ethylene glycol, 1,2-propanediol, 1,3-propanediol, 1,2-butanediol, 1,3-butanediol, 1,4-butanediol, neopentyl glycol, 2,3-butanediol, 1,5-pentanediol, 1,6-hexanediol, 2,5-hexanediol, 1,4-cyclohexanediol, 1,4-cyclohexanedimethanol, etc.

The range of the average molecular weight of polycarbonate diol to be used is generally a number average molecular weight of 500 to 5000, preferably 1000 to 3000, and substantially all polymer terminals thereof are desirably hydroxyl groups. In the present invention, in addition to the above-mentioned diols, polycarbonate, which is multifunctionalized using a small amount of a compound having three or more hydroxyl groups in one molecule, for example, trimethylolethane, trimethylolpropane, hexanetriol, pentaerythritol, etc., may be used.

Examples of polyether polyols may include polyethylene glycol, polypropylene glycol, polytetramethylene glycol, random copolymers and block copolymers thereof, and polyoxyalkylene modified products of bisphenol A.

Examples of polycaprolactone polyols may include polycaprolactone polyols obtained by ring-opening addition polymerization of a lactone compound to polyol. Examples of polyols may include the same as the above-mentioned polyol in polyester polyol. Moreover, examples of lactone compounds may include β-propiolactone, pivalolactone, δ-valerolactone, ε-caprolactone, methyl-ε-caprolactone, dimethyl-ε-caprolactone, trimethyl-ε-caprolactone, etc.

Examples of polyalkylene polyols may include polybutadiene polyol, hydrogenated polybutadiene polyol, hydrogenated polyisoprene polyol, etc.

As the polyol, polyester polyol or polycarbonate polyol is preferable, polycarbonate polyol is more preferable, and polycarbonate diol is further preferable.

As long as the isocyanate includes an isocyanate group in one molecule, it is also not particularly limited, with conventionally known ones potentially used. As the isocyanate, polyisocyanate having two or more isocyanate groups in one molecule is preferable. Isocyanates may be used alone, or two or more thereof may be used in combination.

Examples of polyisocyanates may include 4,4'-diphenylmethane diisocyanate (4,4'-MDI), 2,4-diphenylmethane diisocyanate (2,4-MDI), 2,2'-diphenylmethane diisocyanate (2,2'-MDI), carbodiimide-modified diphenylmethane diisocyanate, polymethylenepolyphenyl polyisocyanate, carbodiimidized diphenylmethane polyisocyanate, tolylene diisoocyanate (TDI, 2,4-TDI, 2,6-TDI, or a mixture thereof), xylylene diisocyanate (XDI), 1,5-naphthalene diisocyanate (NDI), tetramethylxylene diisocyanate, phenylene diisocyanate, hexamethylene diisocyanate (HDI), dimer acid diisocyanate, norbornene diisocyanate, lysine diisocyanate, xylylene diisocyanate, tetramethylxylylene diisocyanate, isophorone diisocyanate (IPDI), hydrogenated diphenylmethane diisocyanate (hydrogenated MDI), hydrogenated xylylene diisocyanate (hydrogenated XDI), cyclohexane diisocyanate, dicyclohexylmethane diisocyanate, isophorone diisocyanate, etc.

As the polyisocyanate, diisocyanates or triisocyanates are preferable. Examples of diisocyanates or triisocyanates may include isophorone diisocyanate, tolylene diisocyanate, 4,4'-diphenylmethane diisocyanate, naphthylene diisocyanate, xylylene diisocyanate, phenylene diisocyanate, 3,3'-dichloro-4,4'-phenylmethane diisocyanate, tolylene diisocyanate, hexamethylene diisocyanate, 4,4'-dicyclohexylmethane diisocyanate, hydrogenated xylylene diisocyanate, triphenylmethane triisocyanate, tetramethylxylene diisocyanate, hydrogenated 4,4'-diphenylmethane diisocyanate, etc.

The polyurethane resin in the form of an aqueous emulsion according to the present invention is more preferably a polycarbonate-based urethane resin obtained by reacting polycarbonate polyol and diisocyanate.

A polyolefin resin, an epoxy resin, and a polyamide-imide resin in the form of an aqueous emulsion may be obtained, for example, by a method for emulsifying these curable resins synthesized by a known method, in the presence of a surfactant, by mechanical means. A silicone resin in the form of an aqueous emulsion can be obtained by emulsifying and dispersing a silicone resin synthesized in advance similarly to above, and also by carrying out emulsion polymerization of a silane monomer or a low-molecular weight chain or cyclic silicone oligomer in the presence of a surfactant.

Examples of polyolefin resins may include an olefin copolymer of a polyethylene resin, polypropylene resin, etc., and in particular, a copolymer of these and other vinyl-based monomers. Further, in terms of the storage stability of the aqueous emulsion, the monomer sequence of an olefin copolymer is particularly preferably random (atactic).

The epoxy resin is not particularly limited, with one or more capable of being selected and used from among a bisphenol-type epoxy resin, an amine-type epoxy resin, a phenol novolak-type epoxy resin, a cresol novolak-type epoxy resin, a resorcinol-type epoxy resin, a phenolaralkyl-type epoxy resin, a naphthol aralkyl-type epoxy resin, a dicyclopentadiene-type epoxy resin, an epoxy resin having a biphenyl skeleton, an isocyanate-modified epoxy resin, a tetraphenylethane-type epoxy resin, a triphenylmethane-type epoxy resin, a fluorene-type epoxy resin, etc.

The polyamide resin is a synthetic resin having an amide bond, and generally, one that can be obtained by a condensation reaction between a polybasic acid having two or more carboxyl groups and polyamine having two or more amino groups can be used. Examples of polybasic acids may include succinic acid, glutaric acid, adipic acid, sebacic acid, phthalic acid, isophthalic acid, terephthalic acid, trimellitic acid, tetrahydrophthalic acid, end methylenetetra hydrophthalic acid, hexahydrophthalic acid, etc. In contrast, examples of polyamines may include hydrazine, methylenediamine, ethylenediamine, propylenediamine, butylenediamine, hexanediamine, ethylaminoethylamine, methylaminopropylamine, iminobispropylamine, diethylene triamine, triethylene tetramine, polyethyleneimine, diaminobenzene, triaminobenzene, diaminoethylbenzene, triaminoethylbenzene, diaminoethylbenzene, triaminoethylbenzene, polyaminonaphthalene, polyaminoethylnaphthalene, and N-alkyl derivatives or N-acyl derivatives thereof, etc. Polyamide resins may be used alone, or two or more thereof may be used in combination.

The polyamide resin is particularly unlimited as long as it is a polymer having an amide bond and imide bond in the molecule thereof, and for example, can be prepared by a method of polymerizing diisocyanate compounds and trivalent carboxylic acid derivatives having acid anhydride group in a solvent having an urea bond, such as the following method. A polyamide-imide resin prepared by the synthesis method is a solution solving in a solvent and may be used alone or a combination of two or more thereof.

(1) a method of obtaining the polyamide-imide resin by reacting all of a diisocyanate compound and a trivalent carboxylic acid derivative having acid anhydride group, and further, if such exist, a tetravalent carboxylic acid derivative having a dicarboxylic acid compound or a diol compound and two acid anhydride groups.

(2) a method of obtaining the polyamide-imide resin by synthesizing an oligomer having an isocyanate group at the end thereof by reacting a dicarboxylic acid compound or a diol compound and an excess isocyanate compound and then reacting in addition a trivalent carboxylic acid derivative having acid anhydride group and, if necessary, a tetravalent carboxylic acid derivative having two acid anhydride groups.

(3) a method of obtaining the polyamide-imide resin by synthesizing an oligomer having acid or acid anhydride group by reacting a trivalent carboxylic acid derivative having acid anhydride group and, if necessary, an excess tetravalent carboxylic acid derivative having two acid anhydride groups and then reacting in addition a dicarboxylic acid compound or a diol compound.

The silicone resin is particularly unlimited, with the silicone resin has a siloxane unit and is an organopolysiloxane functioning as binder resin by curing or removing a solvent (drying and solidifying), for example, it may have functional organic modifying groups in the side chain or the main chain, such as an acrylic-modified silicone resin. The silicone resin preferably is a branched organopolysiloxane containing one or more siloxane units independently elected from $(R_3SiO_{0.5})$ siloxane unit, $(R_2SiO)$ siloxane unit, $(RSiO_{1.5})$ siloxane unit or $(SiO_2)$ siloxane unit (generally, each is called M siloxane unit, D siloxane unit, T siloxane unit and Q siloxane unit) (in the formula, R can be optional organic group containing 1 to 30 carbon atoms, preferably an alkyl group or an aryl group having up to 8 carbon atoms, more preferably a methyl group, an ethyl group or a phenyl group). Especially, the preferable silicone resin includes the both of D siloxane unit and T siloxane unit.

Examples of the method of dispersion or emulsion in order to obtain the curable resin in the form of an aqueous emulsion may include conventionally-known emulsion methods. Examples of the emulsion methods may include high-pressure emulsion methods using a mechanical force, reverse emulsion methods, ultrasonic emulsion methods, solvent emulsion methods, etc. Note that, in case that the curable resin is not self-emulsifiable, a surfactant that is the same as or different from the below-mentioned surfactant is used, and the curable resin is preferably emulsified or dispersed in water.

The curable resin in the form of an aqueous emulsion contains water as a dispersal medium, in addition to the curable resin and optional surfactant component; wherein, for the case in which the curable resin in the form of an aqueous emulsion is used as a component of the aqueous coating agent composition, a part or all thereof is contained in water as a solvent.

[(B) Solid Lubricant]

A lubricating film according to the present invention contains 5 to 200 parts by mass, preferably 20 to 180 parts by mass, more preferably 40 to 150 parts by mass of the solid lubricant (B) for 100 parts by mass of the component (A). By containing the solid lubricant, the lubricating film according to the present invention can maintain superior sliding property for a long time and provide a lubricating film having a high adhesion and superior sliding durability. Herein, "100 parts by mass of the component (A)" means 100 parts by mass of solid content of the coat-formable resin binder (A) removed a solvent.

While the solid lubricant is not particularly limited, one solid lubricant may be used, or two or more solid lubricants may be used in combination. Specific examples thereof may include molybdenum disulfide, tungsten disulfide, calcium stearate, mica, black lead, polytetrafluoroethylene (PTFE), other lubricating resins, a composite oxide ($Sr_xCa_{1-x}CuO_y$, etc.) having an oxygen defect perovskite structure, etc. Other examples may include fine particles that suppress direct contact between metals without significantly reducing the friction coefficient, with a burning-prevention effect potentially expected, and the fine particles including carbonates (carbonate of alkali metals or alkali earth metals such as $Na_2CO_3$, $CaCO_3$ and $MgCO_3$), silicates ($M_xO_ySiO_2$[M: alkali metal, alkali earth metal], etc.), metal oxides (oxide of a typical metal element, oxide of a transition metal element, composite oxide containing these metal elements [$Al_2O_3/MgO$, etc.], etc.), sulfides (PbS, etc.), fluorides ($CaF_2$, $BaF_2$, etc.), carbides (SiC, TiC), nitrides (TiN, BN, AlN, $Si_3N_4$, etc.), cluster diamonds, fullerene $C_{60}$, mixtures of fullerene $C_{60}$ and $C_{70}$, etc. Examples of the above-mentioned typical metal elements may include $Al_2O_3$, CaO, ZnO, SnO, $SnO_2$, CdO, PbO, $Bi_2O_3$, $Li_2O$, $K_2O$, $Na_2O$, $B_2O_3$, $SiO_2$, MgO, $In_2O_3$, etc. Among others, the typical metal elements thereof are preferably alkali earth metals, aluminum, or zinc. Examples of the above-mentioned oxide of transition metal elements may include oxides such as $TiO_2$, NiO, $Cr_2O_3$, $MnO_2$, $Mn_3O_4$, $ZrO_2$, $Fe_2O_3$, $Fe_3O_4$, $Y_2O_3$, $CeO_2$, CuO, $MoO_3$, $Nd_2O_3$, $H_2O_3$, etc.

Preferred examples of solid lubricants may include fine particles of organic compounds including fluorine resins (in particular, polytetrafluoroethylene, tetrafluoroethylene hexafluoropropylene copolymer, etc.), polyethylene resins, polyamide resins, polypropylene resins, polyimide resins, and silicon resins; fine particles of inorganic compounds such as molybdenum disulfide, graphite, silicon oxide, aluminum oxide, boron nitride and zinc oxide; fine particles of metals such as lead; and mixtures thereof. In particular, it is preferable to use at least one kind of solid lubricant selected from a fluorine resin, a polyethylene resin, a polyamide resin, molybdenum disulfide, graphite, aluminum oxide, boron nitride, zinc oxide, titanium oxide, zirconium oxide and mixtures thereof. From a point of view of realizing mute of the lubricating film, the fine particles of inorganic compound are preferable, particularly molybdenum disulfide, graphite, silicon oxide, aluminum oxide, boron nitride and zinc oxide are preferable.

The average particle diameter of the solid lubricant is preferably 15 $\mu$m or smaller, more preferably 0.2 to 10 $\mu$m. Note that the average particle diameter used herein refers to the volume average particle diameter measured using a laser diffraction particle size distribution measurement apparatus or the particle diameter observed using a scanning electron microscope.

[Other solid particles]

The lubricating film according to the present invention may contain solid particles excluding the solid lubricant. These solid particles are components which provide desired functions with the lubricating film according to the present invention. The kind of the solid particles is particularly unlimited, examples thereof may include functional particles such as reinforcing fillers, thickeners, abrasion-resistant agents, pigments, coloring materials, ultraviolet ray absorbents, thermally-conductive fillers, conductive fillers and insulating materials. Note that part of the particles can be blended as multiple functional particles.

While the shape of the above-mentioned solid lubricants and other solid particles is not particularly limited, any shape such as a particle shape, a plate shape, a needle shape and a fiber shape can be used. For the case in which the shape of solid particles is anisotropic such as a plate shape, a needle shape, or a fiber shape, the aspect ratio thereof is 1.5 or more, 5 or more, or 10 or more.

[Surfactants]

The lubricating film according to the present invention may be obtained by curing the coating agent composition, for sliding member, containing the above-mentioned component (A) and component (B), further the coating agent composition is an aqueous coating agent composition and preferably contains surfactants. Herein, the solid particles, especially the solid lubricants are generally poor water-dispersible even if a hydrophilic treatment is executed on the surface thereof, so that, in the case of using no surfactants, solid lubricants and solid particles separate or submerge from the aqueous coating agent composition, therefore it is difficult to obtain uniform aqueous coating agent composition.

On the other hand, as mentioned above, the surfactants and/or solid particles added thereinto may impair the dispersion stability of the coating agent composition for sliding member in the form of an aqueous emulsion. The surfactant according to the present invention may be a surfactant used for forming the coating agent composition in the form of an aqueous emulsion, or may be a surfactant that is different from a surfactant used for forming the curable resin in the form of an aqueous emulsion. This is because, for the case in which the resin emulsion can be formed as in a self-emulsifiable polyurethane resin even if using no surfactant, when the surfactant is added thereinto in order to disperse solid particles, the surface of the curable resin may interact with the surfactant, thereby impairing the dispersion state thereof. In the present invention, particularly suitably, the surfactant is a different surfactant from that used for the emulsion formation of component (A), and preferably, specifically contains an ionic surfactant and more specifically contains an anionic surfactant.

The kind of surfactant of component (B) is not particularly limited, with any of a nonionic surfactant, an anionic surfactant, an amphoteric surfactant, and a cationic surfactant capable of being used.

[(C) Optional Solvent]

The lubricating film according to the present invention may be obtained by curing the coating agent composition, for sliding member, containing the above-mentioned component (A) and component (B), further the coating agent composition desirably contains optional solvent as a dispersal medium. Note that, the solvent may be a water and other hydrophilic solvent or hydrophobic solvent.

Water may be brought thereinto as a dispersal medium of the coat-formable resin binder in the form of an aqueous emulsion, which is the above-mentioned component (A), or may be brought thereinto as an aqueous solution of the surfactant of the component (B).

Solvents without water may be used alone or two or more thereof may be used in combination. The solvents is particularly unlimited, preferable examples thereof may include an organic solvent such as lactone-based compound ($\gamma$-butyrolactone, etc.), methyl ethyl ketone, methyl isobutyl ketone, cyclohexanone, dimethylformamide (DMF), chloroform, dichloromethane, N-methylpyrrolidone (NMP), toluene, dioxane, ethylcarbinol, propanol $\gamma$-picoline, acetonitrile, dimethyl sulfoxide (DMSO) and dimethylacetamide (DMAC), more preferable examples thereof may include a ketone-based organic solvents such as methyl ethyl ketone, methyl isobutyl ketone and cyclohexanone. Also, the hydrophilic solvent may be mixed with a water in advance, and examples thereof include alcohol-based solvents (methanol, ethanol, propanol, etc.) and hydrophilic nitrogen-containing heterocyclic compounds.

Especially, in terms of affinity with water and function as a film-making assistant, solvent containing hydrophilic nitrogen-containing heterocyclic compound and water is preferable, and the hydrophilic nitrogen-containing heterocyclic compound is preferably a 4 to 13-membered cyclic, 4 to 8-membered cyclic or 4 to 6-membered cyclic heterocyclic compound containing one or more nitrogen atoms is preferable, and preferred examples thereof include a 5-membered ring heterocyclic compound containing one or more nitrogens such as a pyrrolidone compound, an imidazolidinone compound or an oxazolidone compound, each of which has a ketone group. In the present invention, particularly suitable component (C) is one or more nitrogen-containing heterocyclic compounds selected from 1,3-dimethyl-2-imidazolidinone, N-methyl-2-pyrrolidone, N-ethyl-2-pyrrolidone, N-methyl-3-methyl-2-pyrrolidone, cyclohexylpyrrolidone, 2-oxazolidone and 3-methyl-2-oxazolidone.

In contrast, when the above-mentioned compounds such as 1,3-dimethyl-2-imidazolidinone are used, an aqueous coating agent composition that stably flows and has superior handling workability can be provided using a solvent that tends not to adversely affect the environment and human body. From the viewpoint of resolving environmental regulations, the most suitable component (C) is a mixture of water and 1,3-dimethyl-2-imidazolidinone.

[Coating agent for sliding member]

The coating agent, for the sliding member, which provides the lubricating film according to the present invention is preferably a form of aqueous emulsion type, solvent-based type or aqueous type, and forms a lubricating film of which the above-mentioned arithmetic average roughness Ra is 0.01 to 0.25 $\mu$m, preferably 0.01 to 0.20 $\mu$m. The most preferable coating agent for the sliding member is the form of aqueous emulsion type. Especially, the coating agent of the present invention contains the solid lubricant (B), thereby it is possible that the lubricating film having the above-mentioned arithmetic average roughness Ra on the surface of the base member thereof is formed, and also the lubricating film can be used as an aqueous-based paint for the lubricating film. The aqueous-based paint for the lubricating film according to the present invention has superior handling workability as aqueous-based paints or coating agents, further the lubricating film can maintain superior sliding property for a long time and has superior quiet property. Therefore, the coating agent for sliding member of the present invention can provide a lubricating film having a high adhesion, superior sliding durability and superior quiet property reducing a rubbing sound on other member, as a paint composition for lubricating films. Note that, the surface roughness of the lubricating film according to the present invention may be in the above-mentioned range immediately after forming the lubricating film by coating, or the lubricating film after processing in surface polishing or sliding on a counter member may be in the above-mentioned ranges (especially preferable ranges).

The coating agent, for sliding member, of aqueous emulsion type according to the present invention contains the above-mentioned components (A) to (C), optional solid component and other water-soluble components, and suitably, with respect to 100 parts by mass of solid components of the coat-formable resin binder (A), an amount of the surfactant may be possibly 0.1 to 50 parts by mass, preferably 2 to 40 parts by mass, and more preferably 5 to 35 parts by mass.

An amount of the solid lubricant (B) and optional solid particle may be possibly 5 to 200 parts by mass, preferably 20 to 180 parts by mass, and more preferably 40 to 150 parts by mass. An amount of the (C1) optional solvent (excluding water) may be possibly 1 to 1000 parts by mass, preferably 2 to 800 parts by mass, more preferably 5 to 300 parts by mass.

An amount of the (C2) water may be possibly 0 to 1000 parts by mass, preferably 100 to 800 parts by mass, and more preferably 300 to 600 parts by mass.

Note that the "solid content of component (A)" used herein is a nonvolatile component for the case in which water or other volatile components (solvents) is/are removed from the component (A) by drying or heating, which is mainly made of a main agent of the curable resin or the nonvolatile curable resin itself. Additionally, in the case that the component (C1) is a hydrophilic nitrogen-containing heterocyclic compound, an amount of the component (C1) added thereto is in the range of 1 to 100 parts by mass, preferably 5 to 50 parts by mass, for 100 parts by mass of (C2) water.

[Other Water-Soluble Optional Components]

As long as the aqueous coating agent for sliding member of the present invention does not impair the technical effects of the present invention, such as the stability of the above-mentioned curable resin in the form of an aqueous emulsion, the handling workability and the function of the obtained coating film, the coating agent may contain a lame agent, a pearl agent, an antiseptic agent, a perfume, a plasticizer, an anti-foam agent, a filler, an antioxidant, an ultraviolet ray absorbent, a curing agent, a catalyst, a solvent, a water-soluble high molecule, a fire retardant, an antistatic agent, a heat stabilizer, a pH adjustor, and an additive added for the purposes of anti-freezing, wetting, pigment dispersion, emulsion, anti-skinning, leveling, drying promotion, etc.

For example, the coating agent for sliding member of the present invention may include a film-formation assistant. Examples of such a film-formation assistant may include an epoxy resin or an epoxysilane. The epoxy resin as the film-formation assistant can be used in the range of 0.1 to 10% by mass (weight), for example, based on the total mass (weight) of the composition of the present invention. The epoxysilane as the film-formation assistant can be used in the range of 0.1 to 5% by mass (weight), for example, based on the total mass (weight) of the composition of the present invention.

The coating agent for sliding member of the present invention may include at least one silicone gum. In the present invention, silicone gums may be used alone, or multiple silicone gums may be used in combination. By blending the silicone gum, the temperature dependence of the viscosity of the composition according to the present invention can be reduced. As the silicone gum, conventionally known silicone gums can be appropriately used, and can be used in the range of 0.001 to 3% by mass (weight), for example, based on the total mass (weight) of the composition of the present invention.

The coating agent for sliding member of the present invention may include at least one anti-foam agent. In the present invention, anti-foam agents may be used alone, or multiple anti-foam agents may be used in combination. By blending the anti-foam agent, it is possible to suppress foaming during the application of the composition of the present invention and facilitate application work. As the anti-foam agent, conventionally known anti-foam agents can be appropriately used, and can be used in the range of 0.00001 to 1 (mass) wt %, for example, based on the total mass (weight) of the composition of the present invention.

The coating agent for sliding member of the present invention may include at least one thickening agent. In the present invention, thickening agents may be used alone, or multiple thickening agents may be used in combination. By blending the thickening agent, it is possible to increase the viscosity of the composition, reduce dripping during application, and facilitate application work. As the thickening agent, conventionally known thickening agents can be appropriately used, and can be used in the range of 0.001 to 1% by mass (weight), for example, based on the total mass (weight) of the composition of the present invention.

[Preparation Method of the Coating Agent for Sliding Member]

While the method for preparing the agent according to the present invention is not particularly limited, the agent can be obtained by uniformly mixing/dispersing the above-mentioned each component using mechanical force, and is manufactured, as required, by mixing/dispersing water for adjusting a concentration and any other additives. There are no limitations on the mixing method and mixing procedure.

[Base Member]

The coating agent composition of the present invention, suitably an aqueous coating agent composition, can be cured by drying under normal temperature or heating and/or irradiating to the composition with high energy rays, thereby the agent can be used to form a lubricating film so that a coating film or a lubricating film having high adhesion on the surface of any base member.

The material of the base member is not particularly limited, with examples thereof potentially including metals such as iron, aluminum, and copper, rubber, resin, paper, wood, glass, cement, asphalt, leather, etc. If necessary, the surface of the base member may be subjected to roughening treatment via electrolytic etching, chemical etching, shot blasting, etc., along with chemical treatment via phosphate, etc., in order to improve the adhesive properties.

In the present invention, a film can be formed on the base member surface by applying the above-mentioned aqueous coating agent composition, suitably the aqueous lubricating film paint composition, onto a base member surface and then drying under normal temperature or heating the composition and/or irradiating the composition with high energy rays.

While the method for applying the composition onto a base member surface is not particularly limited, conventionally known application methods, for example, screen printing, spray methods, knife coating, tumbling methods, immersion methods, brush coating methods, etc. can be used. In particular, for the case in which the composition of the present invention is used as the aqueous lubricating film paint composition, leveling is preferably carried out by leaving the composition to stand for a certain period after application. The lubricity of the obtained film can be improved by leveling. Note that while the base member may be preliminarily heated during application, the composition is preferably applied at room temperature (approximately 25 °C) in terms of workability. Moreover, in order to remove a solvent such as water from the composition of the present invention, the solvent is preferably removed after leaving the composition to stand at room temperature for 1 to 240 minutes, for example, or heating at 40 to 80 °C for 1 to 60 minutes, for example.

In addition, after removing the solvent, for the case in which the curable resin in the composition is heat curable, the composition film applied onto the base member surface is subsequently heated to obtain a cured film. The aspect of heating is appropriately adjustable and can be carried out, for example, at 170 to 200 °C for 5 to 90 minutes. As required, the above-mentioned removal of a solvent and heating for curing a resin may be simultaneously carried out.

For the case in which the curable resin in the composition is curable by high energy irradiation, the composition applied onto the base member surface is irradiated with high energy rays such as ultraviolet rays, X rays, or electron rays to obtain a cured film. In terms of safety, etc., ultraviolet rays are preferable as high energy rays. While the irradiation amount of the ultraviolet rays for the case in which the high energy rays are ultraviolet rays is appropriately adjustable, the cumulative light amount is preferably 1000 to 4000 mJ/cm$^2$, more preferably 2000 to 3000 mJ/cm$^2$.

The present invention also relates to a coating film thus obtained, and specifically, a lubricating film. While the thickness of the film according to the present invention is arbitrary, it can be, for example, 1 to 50 $\mu$m, preferably 2 to 25 $\mu$m, more preferably 3 to 15 $\mu$m.

[Sliding Member and Reduction of Noise]

A sliding member (excluding that used for an image forming apparatus) including a lubricating film contacting with another member is characterized by including a lubricating film having a high adhesion, superior sliding durability and superior quiet property reducing a rubbing sound on another member. The kind of sliding member is particularly unlimited, with examples thereof including those made of rubber, plastic or metal.

The said other member is a member which generates a rubbing sound as a problem to be solved by the present invention, and it may be a sheet-shape or plate-shape member. Especially, the said other member may be a paper, a metal plate or a resin plate. Also, the sliding member having the lubricating film of the present invention reduces the rubbing sound by at least 5% or more in case of sliding between the sliding member and a sheet-shape or plate-shape member such as a paper, a metal plate or a resin plate, so that the sliding member is preferable used as a driving component, a sliding component or a transporting component when the counter member is a paper, a metal plate or a resin plate. It is noted that these sliding members does not include that used for an image forming apparatus.

The sliding member having the lubricating film of the present invention is preferably a sliding member in which the surface roughness of the lubricating film contacting with a sheet-shape or plate-shape member such as a paper, a metal plate or a resin plate is in above-mentioned range, and examples thereof include driving members, sliding members and transporting members, etc. used for mechanical apparatus, such as automobiles, excluding an image forming apparatus, and a mechanical apparatus (excluding an image forming apparatus) capable of reducing noise is provided.

Examples of the above-mentioned rubber sliding member may include timing belts, conveyor belts, body seals for sunroofs, glass runs, weather strips, oil seals, packing, wiper blades, doctor blades and other driving members, sliding members or transporting members, etc. used for mechanical apparatus, such as automobiles, excluding an image forming apparatus.

Examples of the above-mentioned plastic sliding member may include door panels, instrument panels, door locks, bearings, gears, belt tensioners, fixing belts, pressure belts and other driving members, sliding members or transporting members, etc. used for mechanical apparatus, such as automobiles, excluding an image forming apparatus.

Examples of the above-mentioned metal sliding member may include crank shafts, compressor shafts, slide bearings, gears, oil pump gears, pistons, piston rings, piston pins, gaskets, door locks, guide rails, seat belt buckles, brake pads, brake pad clips, brake shims, brake insulators, hinges, screws, pressure pads and other driving members, sliding members or transporting members, etc. used for mechanical apparatus, such as automobiles, excluding an image forming apparatus.

While the form of the sliding member is not particularly limited, it may be, for example, a fiber shape or fibers. Examples of fiber-shaped sliding members or sliding members containing fibers may include vehicle sheets, carpets, tire cords, seat belts, etc.

INDUSTRIAL APPLICABILITY

The applications of the sliding member having the lubricating film according to the present invention are not limited as long as those used for an image forming apparatus are excluded, and, for example, they can be used for the application of electric appliances, ships, railroads, aircrafts, machines, structures, automobile repairs, automobiles, construction, construction materials, fibers, leather, stationery, woodwork, furniture, general merchandise, steel plates, cans, electronic substrates, electronic components, etc. Especially, the present invention can be employed as various products provided with the lubricating film, and in particular, can be suitably employed in order to reduce noise caused by the rubbing sound between the sliding member having the lubricating film and another member.

EXAMPLES

Hereinafter, while the present invention will be described with reference to examples, the present invention is not limited thereto.

[Examples 1 to 17 and Comparative Examples 1 to 2]

Each component was mixed at the ratio shown in Tables 1 to 4 to obtain the coating agent components for sliding member of Examples 1 to 17 and Comparative Examples 1 to 2. Note that the numeric values shown in Tables 1 to 4 denote parts by mass. Further, the coat-formable resin binder in the tables is described as parts by mass (100 parts by mass) of solid content, and water in the form of an aqueous emulsion is described as that contained in water component of solvents.

In Tables 1 to 4, each component is as follows.

<Coat-formable Resin Binders>

- Polyamide-imide resin A: polyamide-imide resin varnish dissolved in γ-butyrolactone (solid content: 30 to 40 wt %)
- Polyamide-imide resin B: polyamide-imide resin varnish dissolved in 1,3-dimethyl-2-imidazolidinone (solid content: 30 to 40 wt %)
- Polyamide-imide resin C: polyamide-imide resin varnish dissolved in N-ethyl-2-pyrrolidone (solid content: 30 to 40 wt %)
- Epoxy resin: liquid epoxy resin which contains 180 to 200 in epoxy equivalent (solid content: 100 wt %)
- Silicone resin: Pelgan Z manufactured by Dow Corning Toray Co., Ltd. (solid content: 78 wt %)
- Polyurethane resin A: aqueous emulsion of aliphatic polyurethane resin (solid content: 40 wt %)
- Polyurethane resin B: aqueous emulsion mixture of aliphatic polyurethane resin and acrylic resin (solid content: 35 wt %)

- Dicyandiamide: Dicyandiamide DICY7 Powder manufactured by Mitsubishi Chemical Corporation (solid content: 100 wt %)

<Solid Lubricants>

- Molybdenum disulfide: molybdenum disulfide powder having a median diameter of 1 to 6 $\mu$m (solid content: 100 wt %) by a laser diffraction scattering type particle size distribution measurement
- Graphite A: graphite powder having a median diameter of 3 to 5 $\mu$m (solid content: 100 wt %) by a laser diffraction scattering type particle size distribution measurement
- Graphite B: graphite powder having a median diameter of 1 to 3 $\mu$m (solid content: 100 wt %) by a laser diffraction scattering type particle size distribution measurement
- Polytetrafluoroethylene A (PTFE powder): spherical polytetrafluoroethylene resin fine particles having a median diameter of 3 to 5 $\mu$m (solid content: 100 wt %) by a laser diffraction scattering type particle size distribution measurement
- Polytetrafluoroethylene B (PTFE dispersion): spherical polytetrafluoroethylene resin fine particles having a median diameter of 0.10 to 0.30 $\mu$m (solid content: 60 wt %) by a laser diffraction scattering type particle size distribution measurement
- Boron nitride: white boron nitride powder having a median diameter of 0.5 to 1.0 $\mu$m (solid content: 100 wt %) by a laser diffraction scattering type particle size distribution measurement
- Zinc oxide: white zinc oxide powder (JIS standard Class 2) having a particle diameter of 0.2 to 0.6 $\mu$m by observation using a scanning electron microscopy
- Zirconium oxide (Zirconium oxide sol): monoclinic zirconium oxide particles having a median diameter of 0.08 to 0.1 $\mu$m (solid content: 40 wt %) by a dynamic light scattering particle size distribution measurement
- Aluminum oxide: white alumina powder having a median diameter of 0.3 to 0.5 $\mu$m (solid content: 100 wt %) by a laser diffraction scattering type particle diameter distribution measurement
- Silicon oxide: white silicon dioxide powder having a primary particle diameter of 5 to 50 nm (solid content: 100 wt %) by observation using a scanning electron microscopy <Solvents>
- $\gamma$-butyrolactone: 99.5% or more of gamma-butyrolactone manufactured by Mitsubishi Chemical Corporation
- 1,3-dimethyl-2-imidazolidinone: DMEU manufactured by Kawaken Fine Chemicals Co., Ltd.
- N-methyl-2-pyrrolidone: N-methyl-2-pyrrolidone manufactured by BASF Japan Ltd.
- Methyl ethyl ketone: methyl ethyl ketone manufactured by Wako Pure Chemical Industries, Ltd.
- Dipropylene glycol monomethyl ether: High-solve DPM manufactured by Toho Chemical Industry Co., Ltd.

<Additives>

- Silicone Fluid (anti-foam agent): 57Additive manufactured by Dow Corning Toray Co., Ltd.
- Silicone emulsion (anti-foam agent): FS Antifoam 013A manufactured by Dow Corning Toray Co., Ltd.

<Lubricating Film Forming A> [Examples 1 to 10, Examples 16 to 17 and Comparative Example 1] (Aluminum base member)

A coating agent composition for sliding member has obtained at the ratio shown in Tables 1 to 4. The coating agent composition (including polyamideimide resin, epoxy resin or silicone resin and dicyandiamide) is coated on a surface of an Aluminum base member (A-1050P manufactured by UACJ Corporation; the surface roughness Ra = 0.05 $\mu$m) by knife coating, and then is heated at 200 °C for 20 minutes, thereby a cured film, of which thickness is 10 to 15 $\mu$m, has been obtained.

<Lubricating Film Forming B> [Examples 11 to 15 and Comparative Example 2] (ABS resin base member)

A coating agent composition for sliding member has obtained at the ratio shown in Tables 1 to 4. The coating agent composition (including polyurethane resin) has been coated by spray coating on an acrylonitrile-butadiene-styrene copolymer (ABS) resin plate (the surface roughness Ra = 0.02 $\mu$m; Tough Ace EAR-003 manufactured by Sumitomo Bakelite Co., Ltd.) in such a way that the thickness after drying is adjusted to be 10 to 15 $\mu$m. Then, in order to evaporate the solvent and water, it has been left to stand at 25 °C for 120 minutes, thereby dried and cured into a lubricating film.

Regarding each example, the friction coefficient of the obtained lubricating film by the following method and the reduction rate of rubbing sound on a countermember have been measured, and the results are also shown in Tables 1 to 4. Note that, in any example and comparative example, surface treatment by polishing or sliding has been not carried out.

<Evaluation Method>

[Friction Coefficient Measurement]

Using a reciprocating friction abrasion tester for reciprocation by rotationally moving a roller (with a vertical load applied thereto) with respect to each test piece (ABS) (with the lubricating film formed therein), the dynamic friction coefficient (unit: $\mu$) during the sliding with respect to an SUJ2 steel roller was measured under the conditions of a sliding speed of 0.2 m/s, a load of 100 g, and a sliding distance (stroke) of 40 mm, and determined using the following criteria.
◎: 0.10 to 0.19
○: 0.20 to 0.29
∆: 0.30 to 0.39
✕: 0.40 to 0.49

<Evaluation Method>

[Surface Roughness Measurement]

The surface roughness Ra ($\mu$m) has been measured by SURFCOM1400D manufactured by Tokyo Seimitsu Co., Ltd. under the condition in which measurement distance is 4 mm and measurement speed are 0.3 mm/s, according to the measurement method of arithmetic average roughness Ra prescribed in JIS B0601-2001.

<Evaluation Method>

[Rubbing Noise Measurement]

The measurement is performed under environment of 27 to 29 dB as test environment. A sound pressure (dB) of rubbing sound has been measured when each test piece formed with the lubricating film overlaps on the following counter members and slides at 100 mm/sec, and a reduction rate to sound pressure of rubbing sound between the following uncoated member and the counter member has been calculated.

- Counter member 1: aluminum plate (the surface roughness Ra = 1.6 $\mu$m)
- Counter member 2: ABS resin plate (the surface roughness Ra = 0.03 $\mu$m)
- Counter member 3: A4 paper (the surface roughness Ra = 2.3 $\mu$m)

    (1) Rubbing sound between an uncoated aluminum plate and the counter member 1 (aluminum plate): 54 dB
    (2) Rubbing sound between an uncoated ABS resin plate and the counter member 2 (ABS resin plate): 40 dB
    (3) Rubbing noise between an uncoated ABS resin plate and the counter member 3 (A4 paper): 53 dB

$$\text{Reduction rate of rubbing sound} = [(\text{rubbing sound (dB) between the uncoated base member and the counter member}) - (\text{rubbing sound (dB) between the lubricating film and the counter member})] / (\text{rubbing sound (dB) between the uncoated base member and the counter member}) \times 100 \ (\%)$$

[Table 1]

| Examples | | 1 | 2 | 3 | 4 | 5 | 6 |
|---|---|---|---|---|---|---|---|
| Resins | Polyamide-imide resin A | 100 | 0 | 0 | 100 | 100 | 100 |
| | Polyamide-imide resin B | 0 | 100 | 0 | 0 | 0 | 0 |
| | Polyamide-imide resin C | 0 | 0 | 100 | 0 | 0 | 0 |
| Solid Lubricants | Molybdenum disulfide | 30 | 30 | 30 | 0 | 0 | 0 |
| | Graphite | 10 | 10 | 10 | 0 | 0 | 0 |
| | Polytetrafluoroethylene A | 0 | 0 | 0 | 30 | 15 | 0 |
| | Polytetrafluoroethylene B | 0 | 0 | 0 | 0 | 0 | 0 |
| | Boron nitride | 0 | 0 | 0 | 0 | 0 | 30 |
| Solvents | $\gamma$-butyrolactone | 200 | 0 | 0 | 200 | 200 | 180 |
| | 1,3-dimethyl-2-imidazolidinone | 0 | 200 | 0 | 0 | 0 | 0 |
| | N-ethyl-2-pyrrolidone | 0 | 0 | 200 | 0 | 0 | 0 |
| Additives | Silicone Fluid (Anti-foam agent) | 1 | 1 | 1 | 1 | 1 | 1 |
| Arithmetic average roughness Ra of lubricating film surface ($\mu$m) | | 0.21 | 0.23 | 0.20 | 0.25 | 0.20 | 0.30 |
| Rubbing sound (dB) | Aluminum plate (Surface roughness Ra 1.6 $\mu$m) | 50 | 49 | 50 | 51 | 50 | 49 |
| | ABS resin plate (Surface roughness Ra 0.03 $\mu$m) | 38 | 38 | 38 | 37 | 36 | 37 |
| | A4 paper (Surface roughness Ra 2.3 $\mu$m) | 50 | 50 | 49 | 49 | 48 | 46 |
| Reduction rate (%) | Aluminum plate (Surface roughness Ra 1.6 $\mu$m) | 7 | 9 | 7 | 6 | 7 | 9 |
| | ABS resin plate (Surface roughness Ra 0.03 $\mu$m) | 5 | 5 | 5 | 8 | 10 | 8 |
| | A4 paper (Surface roughness Ra 2.3 $\mu$m) | 6 | 6 | 8 | 8 | 9 | 13 |
| Lubricating film (Friction coefficient) | | ○ | ○ | ○ | ○ | ○ | ○ |

[Table 2]

| | Examples | 7 | 8 | 9 | 10 | 11 | 12 |
|---|---|---|---|---|---|---|---|
| Resins | Polyamide-imide resin A | 100 | 100 | 0 | 0 | 0 | 0 |
| | Epoxy resin | 0 | 0 | 100 | 0 | 0 | 0 |
| | Silicone resin | 0 | 0 | 0 | 100 | 0 | 0 |
| | Polyurethane resin A | 0 | 0 | 0 | 0 | 100 | 100 |
| | Dicyandiamide | 0 | 0 | 15 | 0 | 0 | 0 |
| Solid Lubricants | Polytetrafluoroethylene A | 0 | 0 | 30 | 30 | 0 | 0 |
| | Polytetrafluoroethylene B | 0 | 0 | 0 | 0 | 50 | 0 |
| | Zinc oxide | 40 | 20 | 0 | 0 | 0 | 0 |
| | Zirconium oxide | 0 | 0 | 0 | 0 | 0 | 50 |
| Solvents | $\gamma$-butyrolactone | 200 | 160 | 0 | 0 | 0 | 0 |
| | 1,3-dimethyl-2-imidazolidinone | 0 | 0 | 0 | 0 | 20 | 20 |
| | Methyl ethyl ketone | 0 | 0 | 100 | 0 | 0 | 0 |
| | Water | 0 | 0 | 0 | 0 | 250 | 250 |
| Additives | Silicone Fluid (Anti-foam agent) | 1 | 1 | 1 | 1 | 0 | 0 |
| | Silicone emulsion (anti-foam agent) | 0 | 0 | 0 | 0 | 1 | 1 |
| | Sodium dodecylbenzenesulfonate (Surfactant) | 0 | 0 | 0 | 0 | 0.5 | 0.5 |
| Arithmetic average roughness Ra of lubricating film surface ($\mu$m) | | 0.12 | 0.07 | 0.21 | 0.23 | 0.03 | 0.02 |
| Rubbing sound (dB) | Aluminum plate (Surface roughness Ra 1.6 $\mu$m) | 47 | 46 | 50 | 51 | 44 | 41 |
| | ABS resin plate (Surface roughness Ra 0.03 $\mu$m) | 33 | 32 | 37 | 38 | 31 | 31 |
| | A4 paper (Surface roughness Ra 2.3 $\mu$m) | 46 | 42 | 46 | 46 | 42 | 43 |
| Reduction rate (%) | Aluminum plate (Surface roughness Ra 1.6 $\mu$m) | 13 | 15 | 7 | 6 | 19 | 24 |
| | ABS resin plate (Surface roughness Ra 0.03 $\mu$m) | 18 | 20 | 8 | 5 | 24 | 22 |
| | A4 paper (Surface roughness Ra 2.3 $\mu$m) | 13 | 21 | 13 | 13 | 21 | 19 |
| Lubricating film (Friction coefficient) | | ○ | ○ | ○ | ○ | ◎ | ○ |

[Table 3]

| Experimental Examples | | Examples | | | | |
|---|---|---|---|---|---|---|
| | | 13 | 14 | 15 | 16 | 17 |
| Resins | Polyamide-imide resin A | 0 | 0 | 0 | 0 | 0 |
| | Polyamide-imide resin C | 0 | 0 | 0 | 100 | 100 |
| | Epoxy resin | 0 | 0 | 0 | 0 | 0 |
| | Polyurethane resin A | 100 | 100 | 0 | 0 | 0 |
| | Polyurethane resin B | 0 | 0 | 100 | 0 | 0 |
| | Dicyandiamide | 0 | 0 | 0 | 0 | 0 |
| Solid Lubricants | Molybdenum disulfide | 0 | 0 | 0 | 0 | 0 |
| | Graphite | 0 | 0 | 0 | 40 | 40 |
| | Polytetrafluoroethylene A | 0 | 0 | 0 | 10 | 10 |
| | Polytetrafluoroethylene B | 0 | 0 | 100 | 0 | 0 |
| | Aluminum oxide | 50 | 0 | 0 | 0 | 0 |
| | Silicon oxide | 0 | 50 | 0 | 0 | 0 |
| Solvents | γ-butyrolactone | 0 | 0 | 0 | 0 | 0 |
| | 1,3-dimethyl-2-imidazolidinone | 20 | 20 | 15 | 0 | 0 |
| | N-ethyl-2-pyrrolidone | 0 | 0 | 0 | 250 | 250 |
| | Dipropylene glycol monomethyl ether | 0 | 0 | 5 | 0 | 0 |
| | Water | 250 | 250 | 300 | 0 | 0 |
| Additives | Silicone Fluid (Anti-foam agent) | 0 | 0 | 0 | 1 | 1 |
| | Silicone emulsion (anti-foam agent) | 1 | 1 | 1 | 0 | 0 |
| | Sodium dodecylbenzenesulfonate (Surfactant) | 0.5 | 0.5 | 0.5 | 0 | 0 |
| Arithmetic average roughness Ra of lubricating film surface (μm) | | 0.03 | 0.04 | 0.05 | 0.30 | 0.28 |
| Rubbing sound (dB) | Aluminum plate (Surface roughness Ra 1.6 μm) | 41 | 46 | 43 | 39 | 39 |
| | ABS resin plate (Surface roughness Ra 0.03 μm) | 33 | 37 | 35 | 33 | 32 |
| | A4 paper (Surface roughness Ra 2.3 μm) | 44 | 43 | 44 | 42 | 41 |
| Reduction rate (%) | Aluminum plate (Surface roughness Ra 1.6 μm) | 24 | 15 | 20 | 28 | 28 |
| | ABS resin plate (Surface roughness Ra 0.03 μm) | 18 | 7 | 13 | 18 | 20 |
| | A4 paper (Surface roughness Ra 2.3 μm) | 17 | 19 | 17 | 21 | 23 |
| Lubricating film (Friction coefficient) | | ○ | ○ | ◎ | ◎ | ◎ |

[Table 4]

| Experimental Examples | | | Comparative Examples | |
|---|---|---|---|---|
| | | | 1 | 2 |
| Resins | Polyamide-imide resin A | | 100 | 0 |
| | Polyamide-imide resin C | | 0 | 0 |
| | Epoxy resin | | 0 | 0 |
| | Polyurethane resin A | | 0 | 100 |
| | Polyurethane resin B | | 0 | 0 |
| | Dicyandiamide | | 0 | 0 |
| Solid Lubricants | Molybdenum disulfide | | 150 | 0 |
| | Graphite | | 50 | 0 |
| | Polytetrafluoroethylene A | | 0 | 150 |
| | Polytetrafluoroethylene B | | 0 | 0 |
| | Aluminum oxide | | 0 | 0 |
| | Silicon oxide | | 0 | 0 |
| Solvents | $\gamma$-butyrolactone | | 400 | 0 |
| | 1,3-dimethyl-2-imidazolidinone | | 0 | 20 |
| | N-ethyl-2-pyrrolidone | | 0 | 0 |
| | Dipropylene glycol monomethyl ether | | 0 | 0 |
| | Water | | 0 | 600 |
| Additives | Silicone Fluid (Anti-foam agent) | | 1 | 1 |
| | Silicone emulsion (anti-foam agent) | | 0 | 0 |
| | Sodium dodecylbenzenesulfonate (Surfactant) | | 0 | 10 |
| Arithmetic average roughness Ra of lubricating film surface ($\mu$m) | | | 3.15 | 2.08 |
| Rubbing sound (dB) | Aluminum plate (Surface roughness Ra 1.6 $\mu$m) | | 59 | 62 |
| | ABS resin plate (Surface roughness Ra 0.03 $\mu$m) | | 44 | 45 |
| | A4 paper (Surface roughness Ra 2.3 $\mu$m) | | 60 | 64 |
| Reduction rate (%) | Aluminum plate (Surface roughness Ra 1.6 $\mu$m) | | -9 | -15 |
| | ABS resin plate (Surface roughness Ra 0.03 $\mu$m) | | -9 | -13 |
| | A4 paper (Surface roughness Ra 2.3 $\mu$m) | | -14 | -21 |
| Lubricating film (Friction coefficient) | | | ◎ | ○ |

**Claims**

1.  A sliding member (excluding that used for an image forming apparatus), having a lubricating film contacting with another member, wherein
    an arithmetic average roughness Ra based on JIS B0601 (2001) of a surface of the lubricating film is 0.01 to 1.0 μm, and
    the lubricating film at least comprises:

    100 parts by mass of a coat-formable resin binder (A); and
    5 to 200 parts by mass of a solid lubricant (B).

2.  The sliding member according to claim 1, wherein
    the arithmetic average roughness Ra is 0.01 to 0.40 μm.

3.  The sliding member according to claim 1 or 2, wherein
    the other member is a paper, a metal plate or a resin plate, and
    the arithmetic average roughness Ra is 0.01 to 0.30 μm.

4.  The sliding member according to any one of claims 1 to 3, wherein
    the component (A) is one or more coat-formable resin binders selected from a polyamide-imide resin, an epoxy resin, a silicone resin, a phenolic resin, a polyacrylic resin, a polyurethane resin and a polyolefin resin, or a modified product thereof.

5.  The sliding member according to any one of claims 1 to 4, wherein
    the component (B) is one or more solid lubricants selected from the group of a fluorine resin, a polyethylene resin, a polyamide resin, a polypropylene resin, a polyimide resin, a silicone resin, a molybdenum disulfide, a graphite, a silicon dioxide, an aluminum oxide, a boron nitride, a zinc oxide, a titanium oxide and a zirconium oxide.

6.  The sliding member according to any one of claims 1 to 5, wherein
    a rubbing sound is reduced by at least more than 5% when the sliding member having the lubricating film slides on the other member, as compared with a rubbing sound generated when a member without a lubricating film slides on the other member.

7.  A component (excluding that used for an image forming apparatus) that is a driving component; a sliding component or a transporting component, the component including the sliding member according to any one of claims 1 to 6.

8.  A mechanical apparatus (excluding an image forming apparatus), having the sliding member according to any one of claims 1 to 6.

9.  A noise reducing method for a mechanical apparatus, wherein
    a sliding member (excluding that used for an image forming apparatus) has a lubricating film contacting with another member,
    the lubricating film at least comprises:

    100 parts by mass of a coat-formable resin binder (A); and
    5 to 200 parts by mass of a solid lubricant (B), and

    an arithmetic average roughness Ra based on JIS B0601(2001) of a surface of the lubricating film is 0.01 to 1.0 μm.

10. The noise reducing method for mechanical apparatus according to claim 9, wherein
    the other member is a paper, a metal plate or a resin plate.

11. A coating agent composition for a sliding member, comprising:

    100 parts by mass of a coat-formable resin binder (A);
    5 to 200 parts by mass of a solid lubricant (B); and
    an optional solvent (C), wherein
    the coating agent composition forms a lubricating film by curing, a surface of the lubricating film having an arithmetic average roughness Ra of 0.01 to 0.30 $\mu$m based on JIS B0601 (2001).

12. The coating agent composition for the sliding member according to claim 11, wherein
the coating agent composition is a form of aqueous emulsion type, solvent-based type or aqueous type; and
the coating agent composition forms the lubricating film having the arithmetic average roughness Ra of 0.01 to 0.25 $\mu$m.

13. A method for manufacturing a mechanical apparatus (excluding an image forming apparatus) in which noise is reduced, comprising:

using the coating agent composition for the sliding member according to claim 11 or 12.

<div align="center">

**INTERNATIONAL SEARCH REPORT**

</div>

| International application No. |
|---|
| PCT/JP2016/086816 |

**A. CLASSIFICATION OF SUBJECT MATTER**

*C10M171/00*(2006.01)i, *C10M103/00*(2006.01)i, *C10M103/02*(2006.01)i,
*C10M103/06*(2006.01)i, *C10M107/04*(2006.01)i, *C10M107/06*(2006.01)i,
*C10M107/38*(2006.01)i, *C10M107/44*(2006.01)i, *C10M107/50*(2006.01)i,
According to International Patent Classification (IPC) or to both national classification and IPC

**B. FIELDS SEARCHED**

Minimum documentation searched (classification system followed by classification symbols)
C09D1/00-10/00, C09D101/00-201/10, C10M101/00-177/00

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-19177 A (Daido Metal Co., Ltd.), | 1-5,7-8, |
|   | 29 January 2009 (29.01.2009), | 11-12 |
| Y | claims 1 to 8; paragraphs [0001], [0025] to | 6,9-10,13 |
|   | [0041]; table 2 |   |
|   | (Family: none) |   |
|   |   |   |
| X | JP 2004-315618 A (Toyota Industries Corp.), | 1-5,7-8, |
|   | 11 November 2004 (11.11.2004), | 11-12 |
| Y | claims 1 to 6; paragraphs [0001], [0009] to | 6,9-10,13 |
|   | [0013], [0018] to [0039]; table 6 |   |
|   | & US 2004/0224856 A1 |   |
|   | paragraphs [0031] to [0098]; table 6; claims 1 |   |
|   | to 19 |   |
|   | & EP 1469050 A1          & BR 401329 A |   |
|   | & KR 10-0583220 B1       & CN 1537909 A |   |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 January 2017 (25.01.17) | 07 February 2017 (07.02.17) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

| International application No. |
| --- |
| PCT/JP2016/086816 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 61-4797 A  (Sharp Corp.),<br>10 January 1986 (10.01.1986),<br>entire text<br>(Family: none) | 6,9-10,13 |
| Y | JP 8-512344 A  (Ford Motor Co.),<br>24 December 1996 (24.12.1996),<br>claims 1 to 22; page 16, lines 13 to 22<br>& US 5363821 A<br>column 8, lines 14 to 31; claims 1 to 22<br>& WO 1995/002025 A1      & EP 707622 A1<br>& CA 2166183 A          & MX 9404800 A | 6,9-10,13 |

Form PCT/ISA/210 (continuation of second sheet) (January 2015)

## INTERNATIONAL SEARCH REPORT

International application No.

PCT/JP2016/086816

Continuation of A. CLASSIFICATION OF SUBJECT MATTER
  (International Patent Classification (IPC))

C10N50/08(2006.01)n

        (According to International Patent Classification (IPC) or to both national
        classification and IPC)

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015242309 A
- JP 2007167836 A
- JP 4104637 B
- JP 14061806 W

**Non-patent literature cited in the description**

- **SCHELL.** *Polymer Review,* 1964, vol. 9, 9-20